# EUROPEAN PATENT SPECIFICATION

(11) **EP 0 579 316 B1**
(45) Date of publication and mention of the grant of the patent: **24.01.1996**
(21) Application number: 93201993.8
(22) Date of filing: 08.07.1993
(51) Int. Cl.: B62B 1/20

(54) **Attachment for barrow**
Anbaugerät für Schubkarre
Accessoire pour brouette

(30) Priority: 15.07.1992 BE 9200659
(43) Date of publication of application: 19.01.1994
(73) Proprietor: Hellebosch, Jan, B-2930 Brasschaat (BE)
(72) Inventor: Hellebosch, Jan, B-2930 Brasschaat (BE)
(74) Representative: Donné, Eddy

(56) References cited:
- FR-A- 2 574 360
- GB-A- 837 228
- GB-A- 2 201 380

## Description

The present invention concerns an attachment for a barrow, in particular for a barrow with a tub-shaped loading space, which attachment can be fitted to the back and the two sides of the loading space of the barrow.

It is known that the loading space of conventional barrows, which are used as building and gardening tools, is rather limited. Thus, the amount of material, such as for example garden refuse, mowed grass and such like, which can be transported with each move of the barrow is very limited, which is particularly disadvantageous when transporting light materials, such as the above-mentioned garden refuse.

The invention aims an attachment for a barrow which serves as a remedy by enlarging the actual loading space of the barrow, such that a bigger amount of material can be transported with each move.

A known embodiment of an attachment for the enlargement of the loading space of a barrow is described in patent FR 2.574.360. Other special attachments, which have other purposes than the enlargement of the loading space, are known from patent GB 837.228 and GB 2.201.380.

The attachment known from patent FR 2.574.360 surrounds the entire perimeter and thus is disadvantageous in that the use of the barrow is hindered, as it is almost impossible to empty out the barrow in this case.

The attachement known from GB 2.201.380 is a removable pivoting hood. In the the position wherein it is pivotad backwards and fitted to the back and the two sides, the hood forms a weather guard. The hood hinders the free access from above to the loading space. The amount of material which can be loaded in the loading space is not increased.

The invention aims an attachement whereby the above-mentioned disadvantage is excluded.

To this end, the attachement mainly consists of a sheet-like element which can be fitted in a position wherein it extends the back and the sides in the height direction, such that, in the normal use position of the barrow, the actual volume of the loading space is increased, but the front side and the top side is left open or mainly open to give free access from above for loading the loading space and free opening via the front side for emptying by tilting the barrow.

According to a preferred embodiment, said screen-shaped element is made of a flexible material, such as a pliable plate. As opposed to rigid partitions as described in patent FR 2.574.360, such a pliable plate is advantageous in that it can be adapted to any shape whatsoever of a tub-shaped loading space. This makes it possible to develop a single standard model of an attachment which can be used on almost any model of a tub-shaped barrow.

An attachment with a screen-shaped element made of a flexible material is also advantageous in that it can be easily adapted to the loading space on the one hand, but can be flattened again on the other hand as a result of which it hardly takes up any space during transport or when being stored.

According to the most preferred embodiment the screen-shaped element is made of an elastic pliable material. The use of an elastic pliable material is advantageous in that the element can be made such that, after being removed from the barrow, it automatically reassumes its flat or almost flat shape. Preferably, the screen-shaped element is made of rubber or synthetic material to this end.

According to a special embodiment the attachment is provided with detachable fixing means which make sure that the attachment does not drop from the barrow as the barrow topples over.

In order to allow for a low-priced production, said screen-shaped element preferably has the shape of a triangle with a rounded apex angle and is made in one piece from one single sheet.

In order to better explain the characteristics according to the invention, some preferred embodiments are described below by way of example only and without being limitative in any way, with reference to the accompanying drawings, where:
figure 1 represents a barrow provided with an attachment according to the invention;
figure 2 represents the attachment from figure 1 as it is disassembled;
figure 3 represents the attachment from figure 2 as it is assembled;
figure 4 represents the back of the attachment from figure 3;
figure 5 represents a section according to line V-V in figure 4;
figure 6 represents a section according to line VI-VI in figure 4;
figures 7 and 8 are similar views as in figures 1 and 4, but with relation to another embodiment;
figures 9, 10 and 11 represent sections according to lines IX-IX, X-X and XI-XI in figure 8.

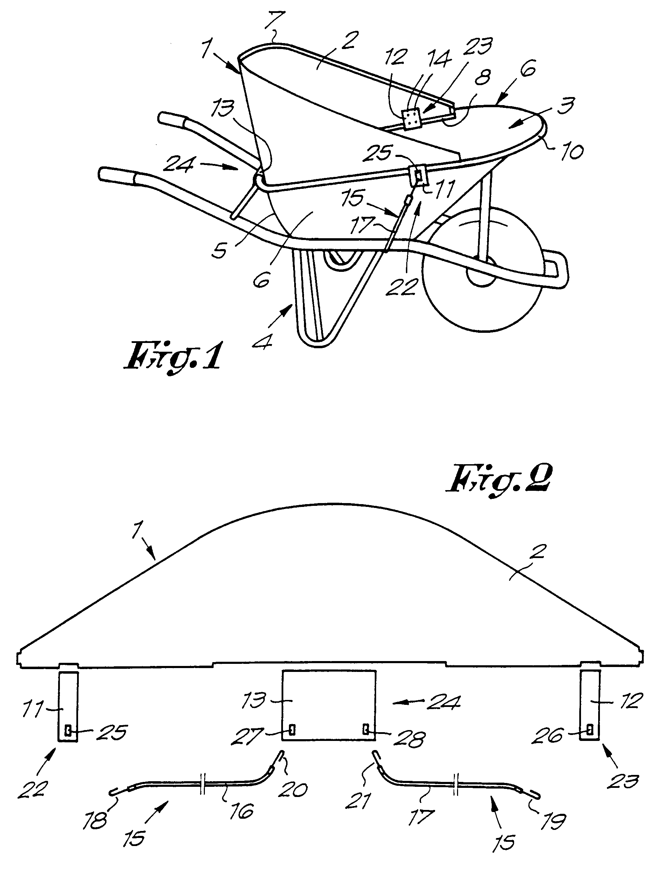

As shown in figure 1, the attachment 1 according to the invention mainly consists of an element 2 which can cooperate with at least part of the perimeter of the loading space 3 of a barrow 4, such that the actual volume of the loading space 3 is increased.

The attachment 1 is hereby designed such that it can cooperate with the back 5 and the two sides 6 of the loading space 3 of the barrow 4, as a result of which the front side remains open.

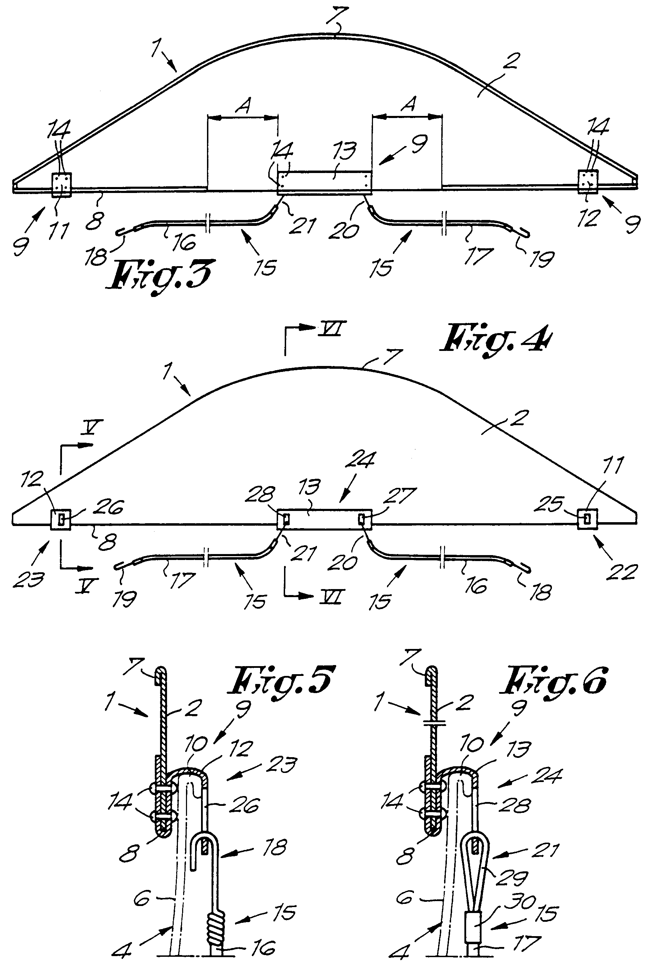

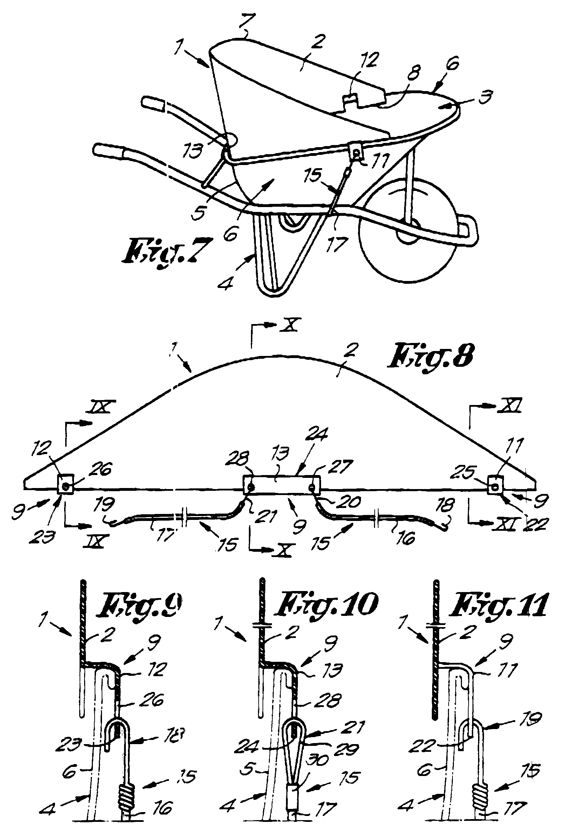

As represented in figures 2 to 4, the element 2 roughly has the shape of a triangle with rounded apex angle when lying flat. The element 2 is preferably made of an elastic flexible material, for example a suited material, such that this element 2 fits on any model of a tub-shaped barrow 4 and reassumes its original, flat, triangular shape after being used on the barrow 4.

As represented in figures 1, 3, 5 and 6 the edges 7 and 8 of the triangular element 2 are preferably at least partially folded back, at least when this element is made of metal, for example over 1 centimetre, so as to provide a reinforcement. However, the bottom edge 8 is hereby not folded back over certain distances A so as to allow for the element 2 to adjust itself easily to the shape of the barrow concerned during the folding.

According to a preferred embodiment, as represented in the figures, the element 2 is provided with supporting means 9 with which said element 2 can be placed on the edge 10 of the barrow 4, in particular on the back 5 and the sides 6 of the loading space 3.

As represented in figures 1, 5 and 6, said supporting means 9 preferably consist of bent elements 11, 12 and 13 which fit over the edge 10 of the loading space 3 of the barrow 4. These elements 11, 12 and 13 are applied such to the screen-shaped element 2 that they can work in conjunction with the back 5 and the two sides 6 of the loading space 3. To this end the elements 11 and 12 are situated near the ends and the element 13 in the middle of the bottom edge 8 of the element 2.

As represented in the figures, the elements 11, 12 and 13 preferably consist of bent plates, whereby the middlemost element 13 has a larger width than the elements 11 and 12.

The plate-shaped elements 11, 12 and 13 are preferably connected to the element 2 by means of rivets 14 as represented in figures 5 and 6, or any other suitable connecting means.

According to the invention the attachment 1 is preferably provided with fixing means 15 which make it possible to fix the attachment 1 to the barrow 4. These fixing means 15 may consist of elastic means, for example one or more elastics 16 and 17, whether or not in the shape of carrier straps. The fixing means can be made such that they can be attached crosswise under the loading space 3 of the barrow 4.

The fixing means 15 are preferably provided with coupling elements 18 to 21 which can work in conjunction with the element 2, either directly, or with coupling elements 22 to 24 which are fixed to the element 2.

As represented in figures 1, 2, 4, 5 and 6, the coupling elements 22 tot 24 consist of lips which are part of the above-mentioned elements 11, 12 and 13 which are provided with openings 25 to 28. The elements 11 and 12 each have one opening, 25 and 26 respectively, whereas the wider element 13 is provided with openings 27 and 28 situated next to one another.

The coupling elements 18 and 19, which are each situated at the end of one elastic 16 and 17, consist of hooks in the example shown which can cooperate with the openings 26 and 25 as represented in figure 5. The coupling elements 20 and 21 provide for a permanent connection with the element 2, such that the fixing means, in this case the elastics 16 and 17 always stay with the element 2 and cannot get lost. As represented in figure 6, these coupling elements may consist of loops 29 which provide for a connection through the openings 27 and 28 and which are kept closed by means of couplings 30. The couplings 30 can preferably be detached, only in order to apply the elastics 16 and 17 to the element 2 or to replace them.

In order to use the attachment 1, this is first folded in the shape of the rearmost part of the loading space 3 of the barrow 4 and placed upon it such that the supporting means 9 rest on the edge 10 of the loading space 3.

The fixing means 15, in this case the elastics 16 and 17, are preferably applied crosswise along the bottom side of the loading space 3. This implies that in the example shown the hook 18 is hooked in the opening 26, whereas the hook 19 is hooked in the opening 25.

In this way, the attachment 1 is immovably fixed to the loading space 3 such that the walls of this loading space 3 are raised at the back 5 and the sides 6 and the volume of the loading space 3 is increased. As a result, more material can be placed in the loading space 3 of the barrow 4 and it will not drop off as the barrow 4 is moved. As the front of the loading space 3 is not raised, the barrow can be tipped over without any problems in order to remove the material.

This attachment 1 is preferably used for the transport of light materials which take up a large volume.

Figures 7 to 11 show a variant whereby the supporting means 9 consist of elements 11, 12 and 13, preferably brackets, characterized in that these elements are folded from the plate of the screen-shaped element 2, whereby the middlemost element 13 may have a larger width than the elements 9 and 11. Moreover, the edges of the element 2 are not folded. Thanks to the constructional simplicity of this embodiment, the number of parts is limited and the manufacturing costs are low.

Although the attachment preferably consists of an elastic pliable plate, it is also possible to make an attachment according to the invention which already has the shape of the loading space and which can be placed loosely in the loading space of the barrow.

The present invention is by no means limited to the embodiments described by way of example and shown in the accompanying drawings; on the contrary, such an attachment for a barrow can be made in various forms and dimensions while still remaining within the scope of the invention.

## Claims

1. Attachment (1) for a barrow (4), in particular for a barrow (4) with a tub-shaped loading space (3), which attachment can be fitted to the back (5) and the two sides (6) of the loading space (3) of the barrow (4), characterized in that it mainly consists of a sheet-like element (2) which can be fitted in a position wherein it extends the back (5) and the sides (6) in the height direction, such that, in the normal use position of the barrow (4), the actual volume of the loading space (3) is increased, but the front side and the top side is left open or mainly open to give free access from above for loading the loading space (3) and free opening via the front side for emptying by tilting the barrow.

2. Attachment (1) according to claim 1, characterized in that the above-mentioned sheet-like element (2) consists of a pliable material.

3. Attachment (1) according to claim 2, characterized in that the material is elastically pliable, such that the sheet-like element (2) mainly reassumes its flat shape after being used on the barrow (4).

4. Attachment (1) according to claim 2 or 3, characterized in that the sheet-like element (2) has the shape of a triangle with a rounded apex angle, when flat.

5. Attachment (1) according to any of the above claims, characterized in that said sheet-like element (2) is provided with supporting means (9) which consist of bent elements (11,12,13) which fit over the edge (10) of the loading space (3) of the barrow (4) and can thus cooperate with the back (5) and the two sides (6) of the barrow (4).

6. Attachment (1) according to claim 5, characterized in that the sheet-like element (2) together with the above-mentioned bent elements (11,12,13) are made in one piece from one single sheet.

7. Attachment (1) according to any of the above claims, characterized in that it is provided with fixing means (15) which make it possible to fix the attachment (1) to the barrow (4).

8. Attachment (1) according to claim 7, characterized in that the fixing means (15) consist of one or more elastics (16,17) in the shape of carrier straps, which can work in conjunction with the sheet-like element (2) by means of coupling elements (18,19) in the shape of hooks.

9. Attachment (1) according to claim 8, characterized in that the fixing means (15) consist of two elastics (16,17) which can cooperate with the centre of the bottom edge (8) of the sheet-like element (2) on the one hand, and the ends of this bottom edge (8) on the other hand.

10. Attachment (1) according to any of claims 7 to 9, characterized in that it is provided with supporting means (9) which consist of bent elements (11,12,13) which fit over the edge (10) of the loading space (3) of a barrow (4); in that these supporting means (9) are provided with coupling elements (22,23,24) for applying the above-mentioned fixing means (15); and in that the above-mentioned coupling elements (22,23,24) consist of lips which are formed by the ends of the bent elements (11,12,13) in which openings (25,26,27,28) are provided.

## Patentansprüche

1. Anbaugerät (1) für eine Schubkarre (4), insbesondere für eine Schubkarre (4) mit einem wannenförmigen Laderaum (3), welches Anbaugerät an der Rückwand (5) und den beiden Seiten (6) des Laderaums (3) der Schubkarre (4) befestigt werden kann, dadurch gekennzeichnet, daß es hauptsächlich aus einem plattenförmigen Element (2) besteht, das in einer Position befestigt werden kann, worin es sich entlang der Rückwand (5) und den Seiten (6) in der Höhenrichtung erstreckt, so daß, in der normalen Gebrauchsposition der Schubkarre (4), das tatsächliche Volumen des Laderaums (3) vergrößert wird, jedoch die Vorderseite und die Oberseite offen oder hauptsächlich offengelassen wird, um von oben freien Zugang zum Beladen des Laderaums (3) und von der Vorderseite her freie Öffnung zum Leeren durch Kippen der Schubkarre zu gestatten.

2. Anbaugerät (1) gemäß Anspruch 1, dadurch gekennzeichnet, daß das obenerwähnte plattenförmige Element (2) aus einem verformbaren Material besteht.

3. Anbaugerät (1) gemäß Anspruch 2, dadurch gekennzeichnet, daß das Material elastisch verformbar ist, so daß das plattenförmige Element (2) seine flache Form nach der Verwendung auf der Schubkarre (4) hauptsächlich wieder annimmt.

4. Anbaugerät (1) gemäß Anspruch 2 oder 3, dadurch gekennzeichnet, daß das plattenförmige Element (2) die Form eines Dreiecks mit einem abgerundeten Höhenwinkel hat, wenn es flach ist.

5. Anbaugerät (1) gemäß einem der vorgenannten Ansprüche, dadurch gekennzeichnet, daß besagtes plattenförmiges Element (2) mit Stützmitteln (9) versehen ist, die aus gebogenen Elementen (11,12,13) bestehen, die über die Kante (10) des Laderaums (3) der Schubkarre (4) passen und somit mit der Rückwand (5) und den beiden Seiten (6) der Schubkarre (4) zusammenwirken können.

6. Anbaugerät (1) gemäß Anspruch 5, dadurch gekennzeichnet, daß das plattenförmige Element (2) zusammen mit den obenerwähnten gebogenen Elementen (11,12,13) in einem Stück aus einer einzigen Platte gefertigt ist.

7. Anbaugerät (1) gemäß einem der vorgenannten Ansprüche, dadurch gekennzeichnet, daß es mit Befestigungsmitteln (15) versehen ist, die die Befestigung des Anbaugeräts (1) an der Schubkarre (4) ermöglichen.

8. Anbaugerät (1) gemäß Anspruch 7, dadurch gekennzeichnet, daß die Befestigungsmittel (15) aus einem oder mehreren elastischen Bändern (16,17) in Form von Befestigungsschnüren bestehen, die mit dem plattenförmigen Element (2) mittels Verbindungselementen (18,19) in Form von Haken zusamenwirken können.

9. Anbaugerät (1) gemäß Anspruch 8, dadurch gekennzeichnet, daß die Befestigungsmittel (15) aus zwei elastischen Bändern (16,17) bestehen, die mit der Mitte der Unterkante (8) des plattenförmigen Elements (2) einerseits und den Enden dieser Unterkante (8) andererseits zusammenwirken können.

10. Anbaugerät (1) gemäß einem der Ansprüche 7 bis 9, dadurch gekennzeichnet, daß es mit Stützmitteln (9) versehen ist, die aus gebogenen Elementen (11,12,13) bestehen, die über die Kante (10) des Laderaums (3) einer Schubkarre (4) passen; dadurch, daß diese Stützmittel (9) mit Koppelelementen (22,23,24) zum Anbringen der obenerwähnten Befestigungsmittel (15) versehen sind; und dadurch, daß die obenerwähnten Koppelelemente (22,23,24) aus Lippen bestehen, die von den Enden der gebogenen Elemente (11,12,13), in denen Öffnungen (25,26,27,28) angebracht sind, gebildet werden.

## Revendications

1. Accessoire (1) pour une brouette (4), en particulier pour une brouette (4) munie d'un espace de chargement (3) en forme de cuvette, ledit accessoire pouvant être fixé à l'arrière (5) et aux deux côtés (6) de l'espace de chargement (3) de la brouette (4), caractérisé en ce qu'il est constitué principalement d'un élément (2) analogue à de la tôle qui peut être placé dans une position dans laquelle il prolonge l'arrière (5) et les côtés (6) en hauteur de telle sorte que, dans la position d'utilisation normale de la brouette (4), on augmente le volume réel de l'espace de chargement (3), le côté avant et le côté supérieur étant laissés ouverts ou principalement ouverts pour procurer un libre accès par le haut pour le chargement de l'espace de chargement (3) et une ouverture libre via le côté avant pour vider la brouette en la basculant.

2. Accessoire (1) selon la revendication 1, caractérisé en ce que l'élément susmentionné (2) analogue à de la tôle est constitué par une matière pliable.

3. Accessoire (1) selon la revendication 2, caractérisé en ce que la matière peut être pliée élastiquement, de telle sorte que l'élément (2) analogue à de la tôle reprend principalement sa forme plate après avoir été utilisé sur la brouette (4).

4. Accessoire (1) selon la revendication 2 ou 3, caractérisé en ce que l'élément (2) analogue à de la tôle possède la forme d'un triangle dont l'angle de sommet est arrondi à l'état plat.

5. Accessoire (1) selon l'une quelconque des revendications ci-dessus, caractérisé en ce que ledit élément (2) analogue à de la tôle est muni de moyens de support (9) qui sont constitués par des éléments coudés (11, 12, 13) qui viennent se disposer par-dessus le bord (10) de l'espace de chargement (3) de la brouette (4) et qui peuvent ainsi coopérer avec l'arrière (5) et les deux côtés (6) de la brouette (4).

6. Accessoire (1) selon la revendication 5, caractérisé en ce que l'élément (2) analogue à de la tôle conjointement avec les éléments coudés (11, 12, 13) mentionnés ci-dessus sont réalisés en une seule pièce à partir d'une tôle unique (7).

7. Accessoire (1) selon l'une quelconque des revendications ci-dessus, caractérisé en ce qu'il est muni d'un moyen de fixation (15) qui permet de fixer l'accessoire (1) à la brouette (4).

8. Accessoire (1) selon la revendication 7, caractérisé en ce que le moyen de fixation (15) est constitué par un ou plusieurs élastiques (16, 17) ayant la forme de sangles de serrage qui peuvent être mises en service conjointement avec l'élément (2) analogue à de la tôle au moyen d'éléments d'accouplement (18, 19) en forme de crochets.

9. Accessoire (1) selon la revendication 8, caractérisé en ce que les moyens de fixation (15) sont constitués par deux élastiques (16, 17) qui peuvent coopérer avec le centre du bord inférieur (8) de l'élément (2) analogue à de la tôle d'une part et avec les extrémités de ce bord inférieur (8) d'autre part.

10. Accessoire (1) selon une quelconque des revendications 7 à 9, caractérisé en ce qu'il est muni de moyens de support (9) qui sont constitués par des éléments coudés (11, 12, 13) qui viennent se disposer par-dessus le bord (10) de l'espace de chargement (3) d'une brouette (4); en ce que ces moyens de support (9) sont munis d'éléments d'accouplement (22, 23, 24) pour appliquer les moyens de fixation (15) susmentionnés; et en ce que les éléments d'accouplement (22, 23, 24) susmentionnés sont constitués par des lèvres qui sont formées par les extrémités des éléments coudés (11, 12, 13), dans lesquelles sont pratiquées des ouvertures (25, 26, 27, 28).
